# EUROPÄISCHE PATENTSCHRIFT

(11) **EP 1 285 305 B1**
(45) Veröffentlichungstag und Bekanntmachung des Hinweises auf die Patenterteilung: **05.11.2003**
(21) Anmeldenummer: 01943345.7
(22) Anmeldetag: 11.05.2001
(51) Int. Cl.: G02B 27/40, G02B 7/28, G02B 21/24

(54) **AUTOFOKUSSIEREINRICHTUNG FÜR OPTISCHE GERÄTE**
AUTOFOCUSSING DEVICE FOR OPTICAL INSTRUMENTS
DISPOSITIF DE MISE AU POINT AUTOMATIQUE DESTINE A DES APPAREILS OPTIQUES

(30) Priorität: 18.05.2000 DE 10024687
(43) Veröffentlichungstag der Anmeldung: 26.02.2003
(73) Patentinhaber: CARL ZEISS JENA GmbH, 07745 Jena (DE)
(72) Erfinder: CZARNETZKI, Norbert, 07747 Jena (DE); MACK, Stefan, 79108 Freiburg (DE); SCHERÜBL, Thomas, 07745 Jena (DE)
(86) Internationale Anmeldenummer: EP0105388
(87) Internationale Veröffentlichungsnummer: WO01088599

(56) Entgegenhaltungen:
- DE-A- 3 446 727
- DE-A- 19 511 937
- GB-A- 2 076 176
- US-A- 4 447 717
- US-A- 5 672 861

## Beschreibung

Die Erfindung bezieht sich auf eine Autofokussiereinrichtung für optische Geräte, bevorzugt für Mikroskope zur Waferinspektion, bei denen eine mit Laserlicht beleuchtete punktförmige Beleuchtungsblende mittels eines Abbildungsobjektivs in ein Beobachtungsobjekt abgebildet wird, dabei in einer zur Beleuchtungsblende konjugierten Meßblendenanordnung ein Bild des auf dem Beobachtungsobjekt beleuchteten Punktes entsteht, mit einem positionsempfindlichen Detektor die Position der maximalen Intensität dieses Bildes ermittelt und diese mit einer Position verglichen wird, die der Fokusposition entspricht und aus der Lageabweichung beider Positionen ein Stellsignal für die Autofokussierung gewonnen wird.

Zur präzisen Abstandsmessung und im Zusammenhang damit auch zum Zwecke der Fokussierung der mikroskopischen Abbildung auf eine zu untersuchende Probe sind derzeit im wesentlichen Verfahren bekannt, die sich wie folgt einordnen lassen:
- Abbildende Verfahren mit Kontrastauswertung bzw. Streifenprojektionsverfahren,
- Triangulationsverfahren,
- sogenannte "Laser-Autofokusverfahren" und
- konfokale Verfahren.

Abbildende Verfahren und zugehörige Anordnungen, bei denen die Meßwertermittlung über eine Kontrastauswertung des von einer Oberfläche reflektierten Lichtes vorgenommen wird, erfordern einen hohen Rechenaufwand bei der Bildverarbeitung und arbeiten außerdem verhältnismäßig langsam. Ferner liefern sie kein Richtungssignal für eine gezielte Stellbewegung zwecks Korrektur der Fokuslage.

Triangulationsverfahren haben zwar einen relativ großen Fangbereich, jedoch sind sie bezüglich der Auflösung in der Koordinate Z auf ca. 300 nm beschränkt. Systeme, die nach diesem Verfahren arbeiten, müssen aufwendig justiert werden, da der Meßstrahl außeraxial verläuft. Deswegen ist es schwierig, einen Triangulationssensor so aufzubauen, daß an mehreren Positionen einer Oberfläche gleichzeitig Abstandsmessungen durchgeführt werden können.

Laser-Autofokusverfahren werden beispielsweise in CD-Playern genutzt. Sie bieten einen großen Fangbereich bei hoher Z-Auflösung. Außerdem liefern sie Signale, aus denen die Richtung der Stellbewegung, in der nachfokussiert werden soll, herleitbar ist. Erfahrungen mit solchen Systemen zeigen, daß die hohe Z-Auflösung jedoch nur dann nutzbar ist, wenn die anzumessende Oberfläche ideale Reflexionseigenschaften besitzt. Schon auf beschichteten Oberflächen, die das einfallende Licht an zwei oder mehr Ebenen reflektieren, erreicht ein Laser-Autofokus-Sensor nicht mehr die vorteilhafte hohe Z-Auflösung; es ergeben sich systematische Meßfehler, deren Größe außerdem noch in einer nicht linearen Weise von den Schichtdicken und -materialien abhängt.

Die vorliegende Erfindung ist dem Gebiet der konfokalen Verfahren zuzuordnen.

DE 34 46 727 A1 beschreibt eine Autofokuseinrichtung für Mikroskope mit einer Hilfsbeleuchtung, die in den Strahlengang des Mikroskops eingespiegelt wird, und einem oder mehreren Detektoren zur Erzeugung eines dem fokusierzustand entsprechenden Signals.

Eine Anordnung, die nach einem konfokalen Verfahren arbeitet, ist beispielsweise in DE 19511937 C2 beschrieben. Mit dieser Anordnung können Mikrostrukturen auch in verschiedenen Ebenen der Oberfläche eines Beobachtungsobjektes mit einer hohen Auflösung abgebildet und vermessen werden, wobei nachteiligerweise aber der Fangbereich verhältnismäßig klein ist und auch kein Richtungssignal für eine automatische Fokussierung geliefert wird.

Bei beschichteten Oberflächen, die zwei oder mehrere Lichtreflexe erzeugen, ergeben sich systematische Meßfehler, deren Größe in einer nichtlinearen Weise von den Schichtdicken und Schichtmaterialien abhängt, wodurch die Auflösung in Z-Richtung in unerwünschter Weise gemindert wird.

Da insbesondere bei der Chipherstellung immer feinere Strukturen und dünnere Schichten angestrebt werden, sind auch an die Inspektionsverfahren, mit denen die Fertigungsgenauigkeit überprüft wird, immer höhere Anforderungen gestellt, was zwangsläufig die Forderung nach schneller und genauer Fokussierung während des Fertigungsablaufes zur Folge hat.

Hiervon ausgehend liegt der Erfindung die Aufgabe zugrunde, eine Anordnung zur konfokalen Autofokussierung von optischen Geräten, bevorzugt zur mikroskopischen Waferinspektion, dahingehend weiterzuentwickeln, daß unter Beibehaltung einer hohen Z-Auflösung und einer hohen Meßgeschwindigkeit über einen großen Fangbereich hinweg ein Richtungsignal zur Fokussierung gewonnen und damit eine schnelle und sichere Fokusnachstellung veranlaßt werden kann.

Erfindungsgemäß ist bei einer Autofokussiereinrichtung der eingangs beschriebenen Art eine Meßblendenanordnung vorgesehen, die mehrere in axialer Richtung hintereinander angeordnete optisch wirksame Bauelemente mit teils transparenten, teils intransparenten, jedoch zueinander komplementären Strukturen umfaßt und bei der die Bauelemente im Strahlengang innerhalb eines der Tiefenschärfe entsprechenden Abstandes zueinander vor und hinter der zur Beleuchtungsblende konjugierten Position angeordnet sind, wobei der Querschnitt des vom Beobachtungsobjekt kommenden Licht-. strahles je nach Lage des Beobachtungsobjektes durch die Strukturen mehr oder weniger abgeblockt wird und somit die Intensität des Bildes auf dem Detektor eine eindeutige Verteilung aufweist, wenn die Lageabweichung gegen "Null" geht bzw. sich das Beobachtungsobjekt in der Fokusposition befindet.

Sind mehrere solcher Bauelemente mit teils transparenten, teils intransparenten, jedoch zueinander komplementären Strukturen in einem bestimmten axialen Abstand zueinander im Detektionsstrahlengang aneinandergereiht, bildet jede dieser Strukturen in Zusammenwirkung mit der Punktlichtquelle einen gesonderten konfokalen Sensor. Hierbei ist jedem Sensor eine Fokusposition zugeordnet.

Wird der axiale Abstand der Bauelemente bzw. der Strukturen zueinander so gewählt, daß sich die entsprechenden Fangbereiche überlappen, erzielt man einen mit der Anzahl der hintereinander angeordneten Bauelemente zunehmend größeren Fangbereich.

In einer vorteilhaften Ausgestaltung der Erfindung sind zwei Bauelemente vorgesehen, von denen jedes eine kreisförmige Struktur in der Größe einer punktförmigen Blende bzw. eines Pinholes aufweist, deren Mittelpunkte in der optischen Achse liegen, wobei die Strukturen der beiden Bauelemente transparent und deren Umgebung intransparent sind.

Diese Strukturen ergeben sozusagen zwei "invertierte" Pinholes. Auf diese Weise wird erreicht, daß immer dann, wenn eine der Strukturen in Konjugation mit der Punktlichtquelle ist, der Detektionsstrahl vollständig abgeblockt wird. Dagegen erreicht der Detektionsstrahl die Empfangsfläche des Detektors mit maximaler Intensität, wenn die Konjugation mit der Punktlichtquelle genau im halben Abstand zwischen den beiden hintereinander angeordneten "invertierten" Pinholes liegt. Das heißt im Umkehrschluß: Die Soll-Fokusposition ist erreicht, wenn bei der erfindungsgemäßen Anordnung der Detektor an einem vorbestimmten Ort die maximale Intensität des Bildes des auf dem Beobachtungsobjekt beleuchteten Punktes registriert, weil dann die Konjugation genau zwischen den beiden "invertierten" Pinholes liegt.

In einer besonders bevorzugten Ausgestaltung der Erfindung sind zwei Bauelemente vorgesehen, von denen jedes eine kreisförmige Struktur in der Größe einer punktförmigen Blende bzw. eines Pinholes aufweist, deren Mittelpunkte in der optischen Achse liegen, wobei von jeder dieser Strukturen jeweils ein Halbkreis transparent und der zweite Halbkreis intransparent ist und wobei die Strukturen von Bauelement zu Bauelement jeweils um 180° um die optische Achse gedreht sind.

Die Soll-Fokusposition ist auch in diesem Falle dann erreicht, wenn der Detektor an einem vorbestimmten Ort die maximale Intensität registriert, weil dann die Konjugation mit der Punktlichtquelle genau im halben Abstand zwischen den beiden hintereinander angeordneten Strukturen liegt. Der Schwerpunkt des Lichtflecks auf dem Detektor bzw. der Ort der maximalen Intensität wird sich aber je nach Defokussierung nach der einen oder anderen Richtung auf der Detektorfläche ändern, weil sich damit die Konjugation zu der einen oder anderen der beiden Strukturen hin verschiebt und dadurch die eine oder die andere Strahlhälfte durch den einen oder den anderen der intransparenten Halbkreise abgeblockt wird.

Ein positionsempfindlicher Detektor liefert dann mit der Auswanderung des Maximums nach der einen oder anderen Richtung ein Differenzsignal, das erfindungsgemäß zum Stellsignal für die Nachfokussierung weiterverarbeitet wird. Über die mit dem Detektor in Verbindung stehende Auswerteeinheit wird dieses Signal in ein Richtungssignal zur Fokussierung gewandelt.

In einer weiteren bevorzugten Ausgestaltung sind vier Bauelemente vorgesehen, von denen jedes eine kreisförmige Struktur in der Größe einer punktförmigen Blende bzw. eines Pinholes aufweist, deren Mittelpunkte in der optischen Achse liegen, wobei von jeder dieser Strukturen jeweils ein Halbkreis transparent und ein Halbkreis intransparent ist, und wobei die Strukturen von Bauelement zu Bauelement jeweils um 90° um die optische Achse gedreht ausgerichtet sind.

Mit einer derartigen Anordnung wird vorteilhaft der Fangbereich erweitert, wobei allerdings ein etwas erhöhter Justieraufwand aufgrund der Mehrzahl der im Strahlengang zu positionierenden Bauelemente in Kauf zu nehmen ist.

Um dies zu vermeiden, sind in einer weiteren Ausgestaltung wiederum nur zwei Bauelemente vorgesehen, von denen jedes eine halbkreisförmige Struktur in der Größe eines halben Pinholes, aber außerdem noch zwei sich bezüglich der optischen Achse diametral gegenüberstehende Viertelkreisbogensegmente aufweist, wobei die Kreismittelpunkte aller Strukturen stets in der optischen Achse liegen und wobei die Viertelkreisbogensegmente von Bauelement zu Bauelement jeweils um 90° um die optische Achse gedreht sind.

Mit den zusätzlich vorhandenen Viertelkreisbogensegmenten als Strukturen werden je nach Fokuslage weitere Anteile des auf den Detektor fallenden Lichtes abgeblockt, wodurch zusätzliche Informationen über den Fokussierzustand gewonnen werden, insbesondere dann, wenn das Maß der Defokussierung größer ist als der den halbkreisförmigen Strukturen zugehörige Fangbereich. Damit wird der Vorteil wie mit vier Bauelementen erreicht, ohne daß sich der Justieraufwand erhöht.

Wird nun als Detektor ein Vier-Quadrantenempfänger verwendet, lassen sich beispielsweise aus Abweichungen des Maximums des Lichtflecks in Richtung einer ersten von zwei orthogonalen Richtungen Stellsignale für eine Grobfokussierung und aus Abweichungen in der zweiten Richtung Stellsignale für eine Feinfokussierung gewinnen.

Die Lage der Strukturen auf dem ersten Bauelement ist dabei komplementär zur Lage der Strukturen auf dem zweiten Bauelement. In den Zentren der Bauelemente können sich anstelle der kreisförmigen auch kreisabschnittförmige Strukturen befinden, die ebenso wie weiter oben bereits beschrieben positioniert sind.

Das zur Fokussierung erforderliche Richtungssignal wird dabei aufgrund der Aufteilung des Lichtstromes auf die Quadrantenpaare extrafokal bzw. intrafokal bestimmt. Beim Vorliegen gleicher oder einander zumindest ähnlicher Reflexionsbedingungen im Beobachtungsobjekt ist bei Verwendung eines Vier-Quadrantensempfängers der in den einzelnen Quadranten meßbare Lichtstrom ein Maß für die Größe der notwendigen Fokusnachstellung.

In weiteren Ausgestaltungen sind die Strukturen auf den Bauelementen in Form von Prismen und/oder Gittern ausgebildet. In besonderen Fällen ist es außerdem von Vorteil, wenn die Strukturen bezüglich ihres Polarisations- und/oder Spektralverhaltens unterschiedlich ausgebildet sind, so daß mit einem geeigneten Detektor zusätzlich das Spektrum bzw. der Polarisationszustand erfaßt werden können.

Je nach Anwendung ist es gegebenenfalls nützlich, mehrere Strukturen in Arrays auf den Bauelementen anzuordnen. Dadurch können gleichzeitig mehrere Meßpunkte auf einem Beobachtungsobjekt erfaßt werden. In diesem Fall wäre eine CCD-Matrix als Empfänger zu verwenden.

Im Zusammenhang mit der Korrektur der Fokuslage sind die Signalausgänge des Detektors über eine Auswerteeinheit mit einer Stelleinrichtung zur Veränderung der Position des Beobachtungsobjektes in der Z-Koordinate und damit zur Korrektur der Fokuslage verbunden.

Zur optimalen Ausnutzung der lichtempfindlichen Empfangsfläche des Detektors ist bevorzugt zwischen den optischen Elementen und dem Detektor eine Feldlinse angeordnet.

In einer weiteren, ebenfalls bevorzugten Ausführung der Erfindung ist die Meßblendenanordnung in Richtung der optischen Achse verschieblich angeordnet und zu diesem Zweck mit einer Verstelleinrichtung, die manuell oder motorisch, im letzteren Falle bevorzugt mit Schrittmotor, angetrieben ist. So kann ein Offset erzeugt werden, indem die Autofokussierung auf eine Ebene vorgenommen wird, die außerhalb des beobachteten Ortes O liegt. Auf diese Weise können zur Autofokussierung Grenzschichten innerhalb einer Probe genutzt werden, die aufgrund ihrer optischen Eigenschaften besser zur Autofokussierung geeignet sind als der zu beobachtende Ort O.

Die Erfindung soll nachfolgend anhand eines Ausführungsbespieles näher erläutert werden. In den dazugehörigen Zeichnungen zeigen
- Fig.1: den prinzipiellen Aufbau der Anordnung unter Verwendung von zwei "invertierten" Pinholes,
- Fig.2: eine Darstellung des Detektorsignales in Abhängigkeit von der Fokusposition bei Verwendung zweier "invertierter" Pinholes,
- Fig.3: die Gestaltung zweier optisch wirksamer Bauelemente mit halbkreisförmigen Strukturen,
- Fig.4: eine Darstellung des Detektorsignales in Abhängigkeit von der Fokusposition bei Verwendung zweier Bauelemente mit halbkreisförmigen Strukturen,
- Fig.5: die Anordnung von vier mit halbkreisförmigen Strukturen versehenen Bauelementen,
- Fig.6: die Anordnung von zwei Bauelementen, die jeweils mit zwei verschiedenen Strukturen versehen sind,
- Fig.7: ein Beispiel für einen Strahlengang durch zwei Bauelemente bei abweichender Fokuslage,
- Fig.8: eine Darstellung zweier Detektorsignale in Abhängigkeit von der Fokusposition,
- Fig.9: die Anordnung zweier Bauelemente mit je zwei sich diametral gegenüberstehenden Viertelkreisbogensegmenten,
- Fig.10: eine schematische Darstellung der Erfassung der Fokusposition unter Verwendung eines VierQuadrantenempfängers als Detektor,
- Fig.11: das Beispiel eines Vier-Quadrantensignals in Abhängigkeit von der Fokusposition,
- Fig.12: den prinzipiellen Aufbau einer Autofokussiereinrichtung mit optimaler Ausnutzung der Empfängerfläche durch Einbeziehung einer Feldlinse.

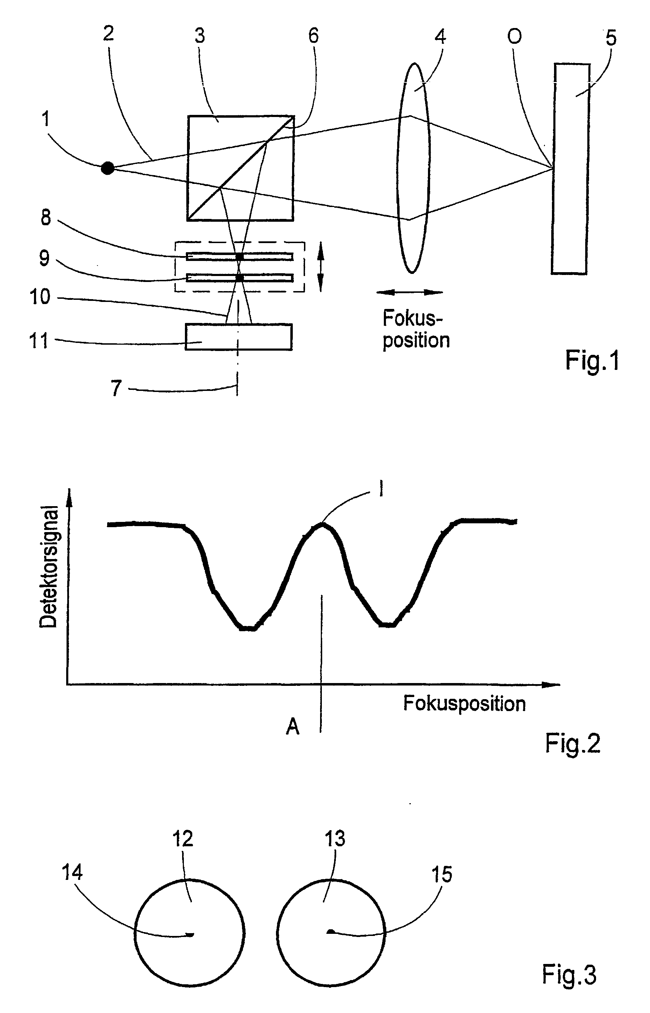

In Fig.1 wird der prinzipielle Aufbau der erfindungsgemäßen Anordnung dargestellt, wobei der von einer punktförmigen Beleuchtungsblende 1 kommende Lichtstrahl 2 durch einen Strahlteilerwürfel 3 über ein Abbildungsobjektiv 4 auf ein Beobachtungsobjekt 5 gerichtet ist. Die Laserlichtquelle, die zur Bestrahlung der Beleuchtungsblende 1 vorhanden ist, ist zeichnerisch nicht dargestellt.

Das vom Beobachtungsobjekt 5 reflektierte Licht gelangt über die teilreflektierende Schicht 6 des Strahlteilerwür fels 3 auf eine Meßblendenanordnung, die aus zwei in Richtung der optischen Achse 7 hintereinander angeordneten "invertierten" kreisförmigen Pinholes 8 und 9 besteht. Dieser Meßblendenanordnung ist ein Detektor 11 nachgeordnet.

Damit wird erreicht, daß immer dann, wenn mit einer Veränderung der Fokusposition sich der Ort der Konjugation mit der Punktlichtquelle entweder dem Pinhole 8 oder dem Pinhole 9 nähert, der Detektionsstrahl 10 zunehmend abgeblockt wird. Dagegen erreicht der Detektionsstrahl 10 die Empfangsfläche des Detektors 11 mit maximaler Intensität, wenn die Konjugation genau im halben Abstand zwischen den beiden "invertierten" Pinholes 8 und 9 liegt.

Die Ursache hierfür besteht darin, daß bei unterschiedlichen Fokuslagen das auf die "invertierten" Pinholes 8,9 treffende Licht aus dem Detektionsstrahlengang 10 in unterschiedlichem Maße abblockt wird.

In Fig.1 ist auch eine besondere Ausgestaltung angedeutet, nach welcher die Meßblendenanordnung in Richtung der optischen Achse verschieblich angeordnet ist, so daß die Autofokussierung auch auf eine Ebene vorgenommen werden kann, die außerhalb des beobachteten Ortes O liegt. Auf diese Weise können zur Autofokussierung Grenzschichten innerhalb einer Probe genutzt werden, die aufgrund ihrer optischen Eigenschaften besser zur Autofokussierung geeignet sind als der zu beobachtende Ort O.

Fig.2 zeigt das Detektorsignal bei einer idealen Fokusposition A. Das das ausgewiesenen Intensitätsmaximum I des Detektorsignals liegt in der Fokusposition A. Ein solcher Fall wird registriert, wenn sich die Konjugation zur Beleuchtungsblende 1 genau im halben Abstand zwischen den "invertierten" Pinholes 8 und 9 befindet.

Wandert der Fokus aus, liefert diese Anordnung allerdings keine Information darüber, nach welcher Richtung dies geschieht, denn dann nimmt die Intensität sowohl in der einen wie auch der anderen Z-Richtung im gleichen Maße ab, wie anhand der in Fig.2 dargestellten Flanken ersichtlich ist. Insofern kann eine zur Nachfokussierung vorzugebende Stellrichtung hier nicht abgeleitet werden.

In einer diesbezüglich vorteilhaften Weiterbildung der Erfindung zeigt Fig.3 eine Ausgestaltungsvariante, bei der zwei Bauelemente 12 und 13, die jeweils eine halbkreisförmige Struktur 14 und 15 aufweisen, anstelle der "invertierten" Pinholes vorgesehen sind. Die Kreismittelpunkte der halbkreisförmigen Strukturen 14 und 15 befinden sich auf der optischen Achse 7. Die Bauelemente 12,13 sind im Detektionsstrahlengang hintereinander angeordnet und außerdem aufeinander bezogen so ausgerichtet, daß die halbkreisförmigen Strukturen 14, 15 von Bauelement zu Bauelement jeweils um 180° um die optische Achse gedreht sind. Dadurch stehen sich die halbkreisförmigen Strukturen 14, 15 komplementär gegenüber bzw. bilden bei Blick in Richtung der optischen Achse 7 einen Vollkreis mit einem Durchmesser in der Größe eines Pinholes, wobei eine erste halbkreisförmige Struktur 14 in axialer Richtung um ein Längenmaß vor der zur Beleuchtungsblende 1 konjugierten Position und die zweite halbkreisförmige Struktur 15 um dasselbe Längenmaß hinter der zur Beleuchtungsblende 1 konjugierten Position liegt. In alternativer Ausführung ist es auch möglich, daß die halbkreisförmigen Strukturen 14, 15 in unterschiedlichen Abständen vor und hinter der zur Beleuchtungsblende 1 konjugierten Position liegen, dann jedoch in einem Abstand zueinander, der nicht größer ist als die Tiefenschärfe.

Wandert der Fokus aus, d.h. schiebt sich der auf dem Beobachtungsobjekt 5 beobachtete Ortes 0 (vgl. Fig.1) zunehmend in Z-Richtung aus der Fokusposition, wandert auch das Maximum des Lichtfleckes bzw. des Bildes des auf dem Beobachtungsobjekt 5 beleuchteten Punktes auf dem Detektor 11 aus.

Verschiebt sich dabei die zur Beleuchtungsblende 1 konjugierte Position im Detektionsstrahlengang 10 zur Struktur 14 hin, wird zunehmend die eine Strahlhälfte abgeblockt, umgekehrt wird zunehmend die andere Strahlhälfte abgeblockt, wenn sich die konjugierte Position im Detektionsstrahlengang 10 zur Struktur 15 hin verschiebt.

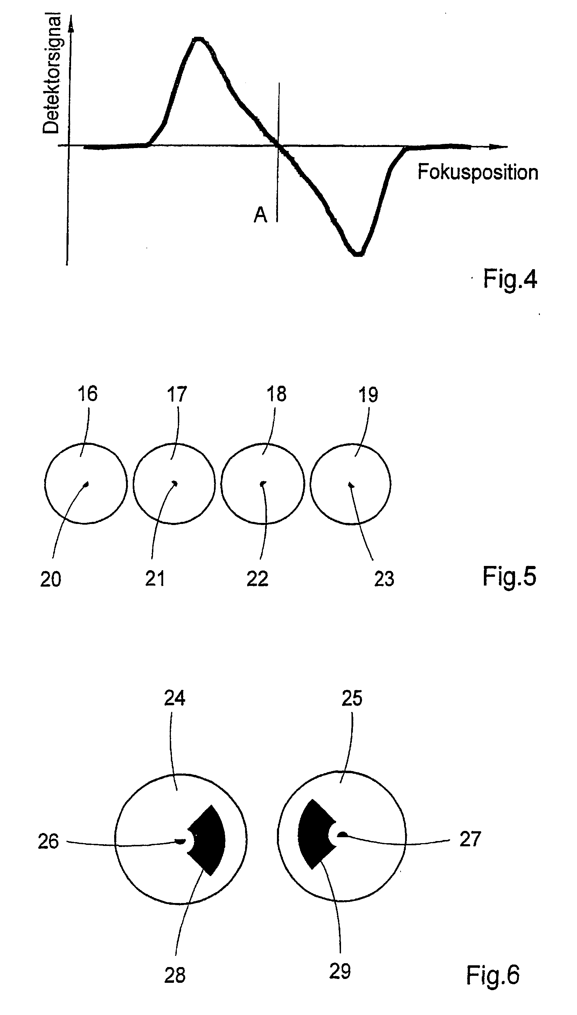

Ein zweigeteilter positionsempfindlicher Detektor 11 liefert dabei ein Differenzsignal wie in Fig.4 dargestellt. In dem dort gezeigten Signalverlauf ist der Detektor 11 so einjustiert, daß das Differenzsignal in der Fokusposition A gleich "null" ist; das Differenzsignal wird bei Verschiebung nach der einen Richtung größer und bei Verschiebung nach der entgegengesetzten Richtung kleiner. Daraus läßt sich ableiten, in welche Richtung die Nachstellung erfolgen muß, um den beobachteten Ort O wieder in die Fokusposition zu bringen. Die Auswertung und Nachstellung kann mit aus dem Stand der Technik bekannten Einrichtungen erfolgen, so daß sich eine nähere Erläuterung an dieser Stelle erübrigt.

Eine weitere Ausgestaltungsvariante zeigt Fig.5. Hier werden vier Bauelemente 1-6, 17, 18, 19 verwendet, die jeweils eine halbkreisförmige Struktur 20, 21, 22, 23 aufweisen, wobei die Kreismittelpunkte wiederum in der optischen Achse 7 liegen. Die Bauelemente 16, 17, 18, 19 werden erfindungsgemäß im Detektorstrahlengang 10 hintereinander so angeordnet, daß sie erstens in symmetrischen Abständen vom Ort der Konjugation liegen und zweitens die Strukturen 20, 21, 22, 23 jeweils um 90° gegeneinander verdreht sind.

Als Detektor 11 wird in diesem Falle ein Vier-Quadrantenempfänger eingesetzt, mit dem sich die Signale für je der beiden Stelleinrichtungen gut detektieren lassen.

Um auch mit zwei optischen Bauelementen einen hohen Fangbereich erreichen zu können, werden - wie in Fig.6 dargestellt - zwei Bauelemente 24 und 25 vorgesehen, die jeweils eine halbkreisförmige Struktur 26, 27 sowie ein dazu radial versetzt angeordnetes Kreisbogensegment 28 und 29 aufweisen. Diese Bauelemente 24 und 25 werden erfindungsgemäß wie bei den bereits beschriebenen Varianten angeordnet, nämlich so, daß sie erstens in symmetrischen Abständen im Strahlengang vor und hinter dem Ort der Konjugation liegen und zweitens die halbkreisförmigen Strukturen 26, 27 und die Kreisbogensegmente 28, 29 jeweils um 180° gegeneinander verdreht sind, wobei die Kreismittelpunkte jeweils auf der optischen Achse 7 liegen.

Die inneren freien Flächenabschnitte der kreisbogenförmigen Strukturen 28, 29 sind dabei so dimensioniert, daß beispielsweise dann, wenn die Konjugation in der Ebene des Bauelementes 24 liegt, der Detektionsstrahlengang 10 von der kreisbogenförmigen Struktur 29 des Bauelementes 25 noch nicht bzw. gerade erst abgeblockt wird. Auf diese Weise werden die kreisbogenförmigen Strukturen 28, 29 optisch erst dann wirksam, wenn die Fokuslage bzw. die Konjugation so weit ausgewandert ist, daß sie sich nicht mehr zwischen den Bauelementen 24, 25 befindet.

Befindet sich die zur Beleuchtungsblende (1) konjugierte Position F außerhalb der Bauelemente 24, 25, jedoch näher beim Bauelement 24, dann ist der Strahldurchmesser auf Bauelement 24 kleiner als auf Bauelement 25.

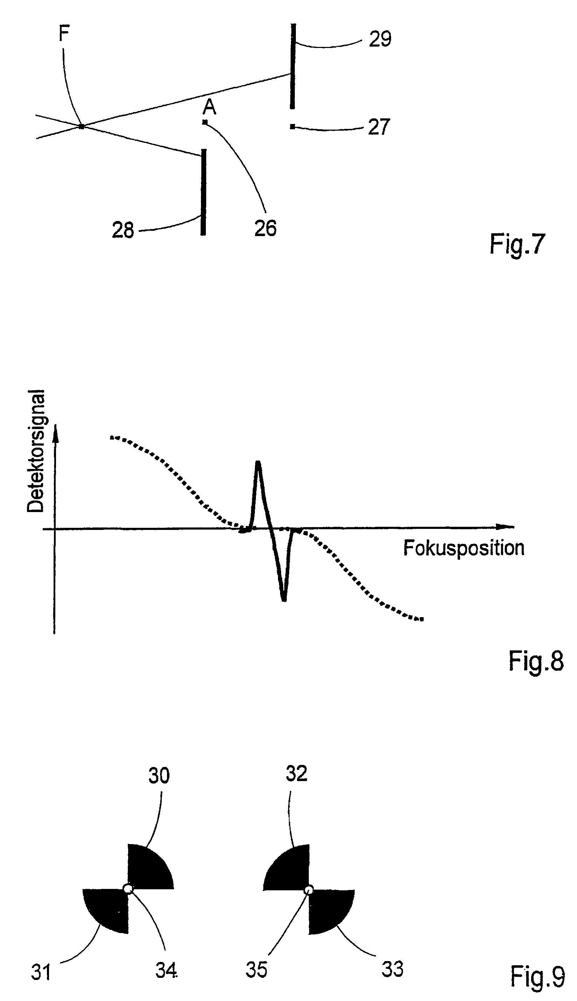

In diesem Fall wird durch die kreisbogenförmige Struktur 29 ein größerer Anteil des Detektionsstrahlenganges 10 abgeblockt als durch die kreisbogenförmige Struktur 28. Dies gilt auch dann, wenn die Konjugation so weit ausgewandert ist, daß bereits die kreisbogenförmige Struktur 28 optisch wirksam wird. Hierzu ist beispielhaft der Strahlengang in Fig.7 dargestellt.

Fig.8 zeigt Detektionssignale zur Fein- und zur Grobfokussierung in Abhängigkeit von der Fokusposition. Verwendet man als Detektor 11 einen Vier-Quadrantenempfänger, so läßt sich über die Schwerpunktlage des Lichtfleckes in der einen Koordinate die Feinfokussierung und über die Schwerpunktlage des Lichtfleckes in der orthogonalen Koordinate die Grobfokussierung kontrollieren.

In Fig.9 wird eine weitere Ausgestaltung der Erfindung dargestellt, die ebenfalls die Verwendung zweier Bauelemente vorsieht. Diese weisen jeweils eine kreisförmige Struktur 34, 35 in der Größe einer punktförmigen Blende bzw. eines Pinholes sowie zwei sich in bezug auf die optische Achse diametral gegenüberstehende Viertelkreisbogensegmente 30, 31; 32, 33 auf. Erfindungsgemäß werden diese Bauelemente so nacheinander angeordnet, daß die Kreismittelpunkte wiederum in der optischen Achse liegen und die Viertelkreisbogensegmente von Bauelement zu Bauelement jeweils um 90° um die optische Achse gedreht sind.

Der innere freie Durchmesser der Strukturen 30, 31, 32, 33 ist dabei so dimensioniert, daß ab etwa dem Airydurchmesser der Detektionsstrahlengang 10 abgeblockt wird und dadurch die Quadranten Q1, Q2, Q3, Q4 des Empfängers nicht erreichen kann. Befindet sich der aktuelle Fokusfleck bzw. die zur Beleuchtungsblende 1 konjugierte Position axial in derselben Position wie das Bauelement mit den Strukturen 30, 31, dann dringt Detektionsstrahlengang 10 durch die Viertelkreisbogensegmente 30, 31 hindurch und erreicht die Quadranten Q1 und Q3, wird dagegen aber durch die Viertelkreisbogensegmente 32, 33 des zweiten Bauelementes bezüglich der Quadranten Q2 und Q4 abgeblockt.

Liegt umgekehrt der Lichtfleck auf den Strukturen 32, 33 des zweiten Bauelementes, dann wird der Detektionsstrahlengang 10 durch die Strukturen 30, 31 des ersten Bauelementes bezüglich der Quadranten Q1 und Q3 abgeblockt.

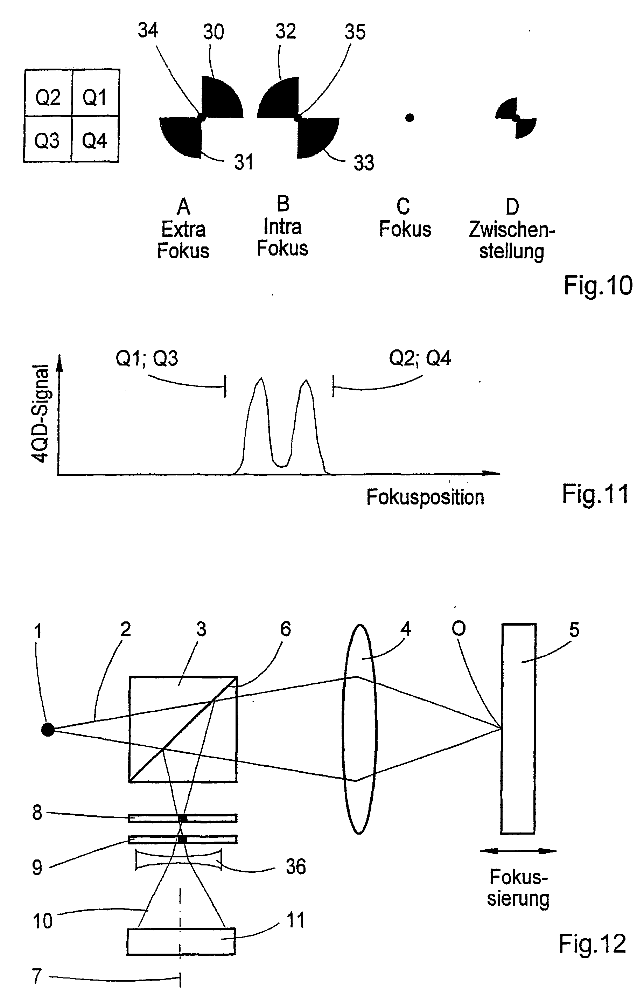

Es entsteht dabei ein resultierender Signalverlauf, wie er in Fig.11 dargestellt ist. Das für die Fokussierung notwendige Richtungssignal wird durch die Teilung des Lichtstromes auf die Quadrantenpaare Q1, Q3 im extrafokalen sowie auf die Quadrantenpaare Q2, Q4 im intrafokalen Fall gewonnen, denn daraus resultiert die Unterscheidbarkeit der Zustellrichtung.

Beim Vorliegen gleicher oder weitestgehend ähnlicher Reflexionskoeffizienten am Beobachtungsobjekt 5 kann die in den einzelnen Quadranten Q1, Q2, Q3, Q4 gemessene Lichtintensität darüber hinaus auch als Regelgröße für das notwendige Maß der Fokuszustellung genutzt werden.

Fig.12 zeigt den prinzipiellen Aufbau der erfindungsgemäßen Anordnung, bei der sich zusätzlich zu der in Fig.1 gezeigten Anordnung eine Feldlinse 36 zwischen den Bauelementen 8 und 9 befindet, was der optimalen Ausnutzung der Empfängerfläche des Detektors 11 dient.

Schließlich zeigt die Ausgestaltung nach Fig.12 auch noch, daß die Nachfokussierung nicht nur wie in Fig.1 vorgesehen durch axiale Verschiebung des Abbildungsobjektivs 4 vorgenommen werden muß, sondern auch, was in einigen Anwendungsfälle günstiger ist, durch Verstellung des Beobachtungsobjektes 5 in Z-Richtung erfolgen kann.

### Bezugszeichenliste

- 1: Beleuchtungsquelle
- 2: Lichtstrahl
- 3: Strahlteilerwürfel
- 4: Abbildungsobjektiv
- 5: Beobachtungsobjekt
- 6: teilreflektierende Schicht
- 7: optische Achse
- 8,9: Pinholes
- 10: Detektionsstrahlengang
- 11: Detektor
- 12,13: invertierte Pinholes
- 14,15: halbkreisförmige Strukturen
- 16,17,18,19: invertierte Pinholes
- 20,21,22,23: halbkreisförmige Strukturen
- 24,25: invertierte Pinholes
- 26,27: halbkreisförmige Strukturen
- 28,29: kreissegmentförmige Strukturen
- 30,31,32,33: viertelkreisförmige Strukturen
- 34,35: Viertelpinholes
- 36: Feldlinse
- 0: Ort
- F: konjugierte Position

## Patentansprüche

1. Autofokussiereinrichtung für optische Geräte, bevorzugt für Mikroskope zur Waferinspektion, bei denen eine mit Laserlicht beleuchtete punktförmige Beleuchtungsblende (1) mittels eines Abbildungsobjektivs (4) in ein Beobachtungsobjekt (5) abgebildet wird, dabei in einer zur Beleuchtungsblende (1) konjugierten Meßblendenanordnung ein Bild des auf dem Beobachtungsobjekt (5) beleuchteten Punktes entsteht, mit einem positionsempfindlichen Detektor (11) die Position der maximalen Intensität dieses Bildes ermittelt und diese mit einer Position verglichen wird, die der Fokusposition entspricht und aus der Lageabweichung beider Positionen ein Stellsignal für die Autofokussierung gewonnen wird, **dadurch gekennzeichnet, daß**
- die Meßblendenanordnung mehrere in axialer Richtung hintereinander angeordnete optisch wirksame Bauelemente mit teils transparenten, teils intransparenten, jedoch zueinander komplementären Strukturen umfaßt und
- die Bauelemente im Strahlengang innerhalb eines der Tiefenschärfe entsprechenden Abstandes zueinander vor und hinter der zur Beleuchtungsblende (1) konjugierten Position angeordnet sind,
- wobei der Querschnitt des vom Beobachtungsobjekt (5) kommenden Lichtstrahles je nach Lage des Beobachtungsobjektes (5) durch die Strukturen mehr oder weniger abgeblockt wird und somit die Intensität des Bildes auf dem Detektor (11) eine eindeutige Verteilung aufweist, wenn die Lageabweichung gegen "Null" geht bzw. sich das Beobachtungsobjekt (5) in der Fokusposition befindet.

2. Autofokussiereinrichtung nach Anspruch 1, **dadurch gekennzeichnet, daß**
- zwei Bauelemente (8,9) vorgesehen sind, von denen jedes eine kreisförmige Struktur in der Größe einer punktförmigen Blende bzw. eines Pinholes aufweist, deren Mittelpunkte in der optischen Achse (7) liegen,
- wobei die Struktur eines ersten der beiden Bauelemente intransparent und seine Umgebung transparent ist.

3. Autofokussiereinrichtung nach Anspruch 1, **dadurch gekennzeichnet, daß**
- zwei Bauelemente (12,13) vorgesehen sind, von denen jedes eine kreisförmige Struktur in der Größe einer punktförmigen Blende bzw. eines Pinholes aufweist, deren Mittelpunkte in der optischen Achse (7) liegen,
- wobei von jeder dieser Strukturen jeweils ein Halbkreis (14,15) transparent und der zweite Halbkreis intransparent ist, und
- wobei die Strukturen von Bauelement zu Bauelement jeweils um 180° um die optische Achse gedreht ausgerichtet sind.

4. Autofokussiereinrichtung nach Anspruch 1, **dadurch gekennzeichnet, daß**
- vier Bauelemente (16,17,18,19) vorgesehen sind, von denen jedes eine kreisförmige Struktur in der Größe einer punktförmigen Blende bzw. eines Pinholes aufweist, deren Mittelpunkte in der optischen Achse (7) liegen,
- wobei von jeder dieser Strukturen jeweils ein Halbkreis (20,21,22,23) intransparent und ein Halbkreis transparent ist, und
- wobei die Strukturen von Bauelement zu Bauelement jeweils um 90° um die optische Achse gedreht ausgerichtet sind.

5. Autofokussiereinrichtung nach Anspruch 1, **dadurch gekennzeichnet, daß**
- zwei Bauelemente (24,25) vorgesehen sind, von denen jedes intransparente Strukturen in Form eines Halbkreises (26,27) sowie ein dazu radial versetzt angeordnetes Kreisbogensegment (28,29) aufweist,
- wobei die Kreismittelpunkte stets in der optischen Achse liegen und
- wobei die Strukturen von Bauelement zu Bauelement jeweils um 180° um die optische Achse gedreht ausgerichtet sind.

6. Autofokussiereinrichtung nach Anspruch 1, **dadurch gekennzeichnet, daß**
- zwei Bauelemente vorgesehen sind, von denen jedes eine kreisförmige Struktur (34,35) in der Größe einer punktförmigen Blende bzw. eines Pinholes sowie zwei sich diametral gegenüberstehende Viertelkreisbogensegmente (30,31; 32,33) aufweist
- wobei die Kreismittelpunkte stets in der optischen Achse liegen und
- wobei die Viertelkreisbogensegmente von Bauelement zu Bauelement jeweils um 90° um die optische Achse gedreht ausgerichtet sind.

7. Autofokussiereinrichtung nach einem der vorgenannten Ansprüche, **dadurch gekennzeichnet, daß** als Detektor (11) ein Vier-Quatrantendetektor vorgesehen ist.

8. Autofokussiereinrichtung nach einem der vorgenannten Ansprüche, **dadurch gekennzeichnet, daß** als Strukturen lichtablenkende Elemente, wie Prismen und/oder Gitter, vorgesehen sind.

9. Autofokussiereinrichtung nach einem der vorgenannten Ansprüche, **dadurch gekennzeichnet, daß** als Strukturen selektierende Elemente, wie Polarisations- und/oder Wellenlängenfilter, vorgesehen sind.

10. Autofokussiereinrichtung nach einem der vorgenannten Ansprüche, **dadurch gekennzeichnet, daß** die Signalausgänge des Detektors (11) über eine Auswerteeinheit mit einer Stelleinrichtung zur Veränderung der Position des Beobachtungsobjekt (5) in der Z-Koordinate und damit zur Korrektur der Fokuslage verbunden sind.

11. Autofokussiereinrichtung nach einem der vorgenannten Ansprüche, **dadurch gekennzeichnet, daß** zwischen der Meßblendenanordnung und dem Detektor (11) eine Feldlinse (36) angeordnet ist.

12. Autofokussiereinrichtung nach einem der vorgenannten Ansprüche, **dadurch gekennzeichnet, daß** die Meßblendenanordnung in Richtung der optischen Achse (7) verschieblich angeordnet ist, wodurch die Autofokussierung auf eine Ebene erfolgt, die außerhalb des beobachteten Ortes (O) liegt.

## Claims

1. Autofocussing device for optical devices, preferably for microscopes for wafer inspection, in which a point-shaped illumination diaphragm (1), which is illuminated by laser light, is imaged into an observed object (5) by means of an imaging lens (4), an image of the point illuminated on the observed object (5) is thereby produced in a measuring diaphragm arrangement conjugate to the illumination diaphragm (1), by means of a position-sensitive detector (11) the position of the maximum intensity of this image is determined and this position is compared with a position which corresponds to the focus position and from the positional difference between the two positions a setting signal for the autofocussing operation is obtained, **characterised in that**
- the measuring diaphragm arrangement includes a plurality of optically active components which are disposed one behind the other in the axial direction and have partially transparent, partially non-transparent but mutually complementary structures, and
- the components are disposed in the beam path within a distance with respect to each other in front of and behind the position which is conjugate to the illumination diaphragm (1), this distance corresponding to the depth of field,
- wherein the cross-section of the light beam coming from the observed object (5) is blocked by the structures to a greater or lesser extent depending on the position of the observed object (5) and therefore the intensity of the image on the detector (11) has a clear distribution when the positional difference tends towards "zero" and/or when the observed object (5) is in the focus position.

2. Autofocussing device as claimed in claim 1, **characterised in that**
- two components (8, 9) are provided, each of which has a circular structure of the size of a point-shaped diaphragm or of a pinhole, the centre points of which lie in the optical axis (7),
- wherein the structure of a first one of the two components is non-transparent and its surroundings are transparent.

3. Autofocussing device as claimed in claim 1, **characterised in that**
- two components (12, 13) are provided, each of which has a circular structure of the size of a point-shaped diaphragm or of a pinhole, the centre points of which lie in the optical axis (7),
- wherein in each of these structures one semi-circle (14, 15) is transparent and the second semi-circle is non-transparent in each case, and
- wherein from component to component the structures are in each case arranged rotated by 180° about the optical axis.

4. Autofocussing device as claimed in claim 1, **characterised in that**
- four components (16, 17, 18, 19) are provided, each of which has a circular structure of the size of a point-shaped diaphragm or of a pinhole, the centre points of which lie in the optical axis (7)
- wherein in each of these structures one semi-circle (20, 21, 22, 23) is non-transparent and one semi-circle is transparent in each case, and
- wherein from component to component the structures are in each case arranged rotated by 90° about the optical axis.

5. Autofocussing device as claimed in claim 1, **characterised in that**
- two components (24, 25) are provided, each of which has non-transparent structures in the form of a semi-circle (26, 27) and a segment (28, 29) in the shape of the arc of a circle, which is disposed radially offset with respect thereto,
- wherein the centre points of the circles always lie in the optical axis and
- wherein from component to component the structures are in each case arranged rotated by 180° about the optical axis.

6. Autofocussing device as claimed in claim 1, **characterised in that**
- two components are provided, each of which has a circular structure (34, 35) of the size of a point-shaped diaphragm or of a pinhole and two diametrally opposing quarter circle segments (30, 31; 32, 33)
- wherein the centre points of the circles always lie in the optical axis and
- wherein from component to component the quarter circle segments are in each case arranged rotated by 90° about the optical axis.

7. Autofocussing device as claimed in any one of the preceding claims, **characterised in that** a four-quadrant detector is provided as the detector (11).

8. Autofocussing device as claimed in any one of the preceding claims, **characterised in that** light-deflecting elements such as prisms and/or gratings are provided as structures.

9. Autofocussing device as claimed in any one of the preceding claims, **characterised in that** selecting elements such as polarisation and/or wave length filters are provided as structures.

10. Autofocussing device as claimed in any one of the preceding claims, **characterised in that** the signal outputs of the detector (11) are connected via an evaluation unit to a setting device to change the position of the observed object (5) in the Z-coordinate and therefore to correct the focus position.

11. Autofocussing device as claimed in any one of the preceding claims, **characterised in that** a field lens (36) is disposed between the measuring diaphragm arrangement and the detector (11).

12. Autofocussing device as claimed in any one of the preceding claims, **characterised in that** the measuring diaphragm arrangement is disposed so as to be displaceable in the direction of the optical axis (7), whereby autofocussing takes place in a plane which lies outside the observed location (O).

## Revendications

1. Dispositif autofocus pour des appareils optiques, de préférence pour des microscopes pour l'inspection de tranches de silicium, sur lesquelles un diaphragme d'éclairage (1) de forme ponctuelle et éclairé avec de la lumière laser est reproduit au moyen d'une optique de reproduction (4) par un objet d'observation (5), une image du point éclairé sur l'objet d'observation (5) se forme dans un dispositif avec diaphragme de mesure conjugué par rapport au diaphragme d'éclairage (1), la position de l'intensité maximale de cette image est déterminée avec un détecteur (11) sensible à la position et est comparée avec une position qui correspond à la position du foyer et un signal de commande pour la mise au point automatique est obtenu à de l'écart de position entre ces deux positions, **caractérisé en ce que**
- le dispositif à diaphragme de mesure comprend plusieurs composants disposés les uns derrière les autres dans le sens axial et efficaces au plan optique avec des structures semi-transparentes, semi-opaques, mais complémentaires entre elles et
- les composants sont disposés dans la trajectoire du faisceau à l'intérieur d'une distance correspondant à la profondeur de champ les uns par rapport aux autres en amont et en aval de la position conjuguée par rapport au diaphragme d'éclairage (1),
- la section du faisceau de lumière arrivant de l'objet d'observation (5) étant plus ou moins bloquée par les structures en fonction de la position de l'objet d'observation (5) et l'intensité de l'image sur le détecteur (11) présentant une répartition claire lorsque l'écart de position tend vers "zéro" et que l'objet d'observation (5) se trouve dans la position du foyer.

2. Dispositif autofocus selon la revendication 1, **caractérisé en ce que**
- il est prévu deux composants (8, 9), dont chacun présente une structure de forme circulaire de la grandeur d'un diaphragme de forme ponctuelle ou d'une piqûre, dont les centres se situent dans l'axe (7) optique,
- la structure d'un premier des deux composants étant opaque et son environnement transparent.

3. Dispositif autofocus selon la revendication 1, **caractérisé en ce que**
- il est prévu deux composants (12, 13) dont chacun présente une structure de forme circulaire de la grandeur d'un diaphragme de forme ponctuelle ou d'une piqûre, dont les centres sont disposés dans l'axe (7) optique,
- chacune de ces structures respectivement un demi-cercle (14, 15) étant transparent et le second demi-cercle opaque et,
- les structures étant orientées en étant tournées respectivement d'un composant à l'autre de 180° autour de l'axe optique.

4. Dispositif autofocus selon la revendication 1, **caractérisé en ce que**
- il est prévu quatre composants (16, 17, 18, 19), dont chacun présente une structure de forme circulaire de la taille d'un diaphragme de forme ponctuelle ou d'une piqûre, dont les centres sont disposés dans l'axe (7) optique,
- chacune de ces structures respectivement un demi-cercle (20, 21, 22, 23) étant opaque et un demi-cercle transparent, et
- les structures étant orientées en étant tournées d'un composant à l'autre de 90° autour de l'axe optique.

5. Dispositif autofocus selon la revendication 1, **caractérisé en ce que**
- il est prévu deux composants (24, 25) dont chacun présente des structures opaques sous la forme d'un demi-cercle (26, 27) et un segment d'arc de cercle (26, 29) disposé avec un décalage dans le sens radial par rapport au demi-cercle
- les centres des cercles étant situés toujours dans l'axe optique et
- les structures étant orientées en étant tournées d'un composant à l'autre de 180° autour de l'axe optique.

6. Dispositif autofocus selon la revendication 1, **caractérisé en ce que**
- il est prévu deux composants, dont chacun présente une structure (34, 35) de forme circulaire de la grandeur d'un diaphragme de forme ponctuelle ou d'une piqûre et deux segments d'arc de quart de cercle (30, 31 ; 32, 33) diamétralement opposés
- les centres des cercles étant situés toujours dans l'axe optique et
- le segment d'arc de quart de cercle étant orienté en étant tourné d'un composant à l'autre de 90° autour de l'axe optique.

7. Dispositif autofocus selon l'une quelconque des revendications précédentes, **caractérisé en ce qu'**un détecteur à quatre quadrants est prévu comme détecteur (11).

8. Système autofocus selon l'une quelconque des revendications précédentes, **caractérisé en ce qu'**il est prévu comme structure des éléments de déviation de lumière tels que des prismes et/ou des réseaux.

9. Dispositif autofocus selon l'une quelconque des revendications précédentes, **caractérisé en ce qu'**il est prévu comme structures des éléments de sélection tels que des filtres de polarisation et/ou des filtres à longueur d'onde.

10. Dispositif autofocus selon l'une quelconque des revendications précédentes, **caractérisé en ce que** les sorties de signal du détecteur (11) sont reliées par une unité d'analyse à un dispositif de commande pour faire varier la position de l'objet d'observation (5) en coordonnée Z et donc pour la correction de la position du foyer.

11. Dispositif autofocus selon l'une quelconque des revendications précédentes, **caractérisé en ce qu'**une lentille de champ (36) est disposée entre le dispositif à diaphragme de mesure et le détecteur (11).

12. Dispositif autofocus selon l'une quelconque des revendications précitées, **caractérisé en ce que** le dispositif à diaphragme de mesure est disposé de façon coulissante en direction de l'axe optique (7), de sorte que la mise au point automatique s'effectue sur un plan qui se situe à l'extérieur de l'endroit (O) observé.
